# EUROPÄISCHE PATENTSCHRIFT

(11) **EP 1 578 187 B1**
(45) Veröffentlichungstag und Bekanntmachung des Hinweises auf die Patenterteilung: **27.02.2008**
(21) Anmeldenummer: 03799585.9
(22) Anmeldetag: 18.12.2003
(51) Int. Cl.: A01K 13/00

(54) **NETZDECKE ALS HALTEGESCHIRR FÜR URIN-SAMMELVORRICHTUNGEN BEI PFERDEN**
NET HORSE-COVER USED AS A FIXING DEVICE FOR AN URINE COLLECTIVE DEVICE PLACED ON A HORSE
SURDOS EN FILET SERVANT DE DISPOSITIF DE FIXATION POUR DISPOSITIF COLLECTEUR D'URINE PLACE SUR UN CHEVAL

(30) Priorität: 23.12.2002 EP 02028895
(43) Veröffentlichungstag der Anmeldung: 28.09.2005
(73) Patentinhaber: Solvay Pharmaceuticals GmbH, 30173 Hannover (DE)
(72) Erfinder: FRINK, Martin, 30900 Wedemark (DE); MAGOSI, Zoltán, H-5820 Mezöhegyes (HU)
(74) Vertreter: Gosmann, Martin
(86) Internationale Anmeldenummer: PCT/EP2003/051046
(87) Internationale Veröffentlichungsnummer: WO 2004/057951

(56) Entgegenhaltungen:
- WO-A-00/72667
- WO-A-02/45488
- DE-A- 19 937 840
- US-A- 1 703 660
- US-B1- 6 318 054

## Beschreibung

Die vorliegende Erfindung betrifft eine Netzdecke für Pferde als einfach handhabbares Haltegeschirr für die flexible und leicht auswechselbare Befestigung einer Urin-Sammelvorrichtung an Pferden. Die erfindungsgemäße Netzdecke als Haltegeschirr ist hierbei insbesondere für die flexible Aufhängung von Urin-Sammelvorrichtungen für die Gewinnung eines natürlichen Gemisches konjugierter Östrogene aus dem Harn trächtiger Stuten vorgesehen.

Östrogene werden in der Medizin zur Hormonsubstitutionstherapie eingesetzt. Insbesondere werden Östrogengemische zur Behandlung und Prophylaxe der bei Frauen auftretenden Beschwerden der Wechseljahre nach natürlicher oder artifizieller Menopause eingesetzt. Hierbei haben sich natürliche Gemische konjugierter Östrogene (CE = conjugated estrogens), wie sie im Harn trächtiger Stuten (PMU = pregnant mares' urine) vorliegen, als besonders wirksam und gut verträglich erwiesen.

Das Sammeln des Urins (Ham) ist daher ein bedeutender Teilschritt in der Hormongewinnung und erfordert geeignete Vorrichtungen, die das Auffangen des Urins in praktikabler und tierverträglicher Weise gestatten. Solche Vorrichtungen setzen sich üblicherweise aus einem Haltegeschirr und einer Urin-Sammelvorrichtung zusammen. Insbesondere sollte die gesamte Vorrichtung leicht zu tragen und mit der normalen Verhaltensweise und den Mobilitäts- und Ruhebedürfnissen des Pferdes verträglich sein. Weiterhin sollte die Vorrichtung aber auch die flexible (leichtes Anbringen und Entfernen bzw. Wechseln der Sammelvorrichtung), möglichst reine (keine Faeces-Kontamination) und Hormon schonende Sammlung des Urins gestatten.

Das Haltegeschirr, an dem die Urin-Sammelvorrichtung befestigt wird, sollte sich leicht an die individuellen Dimensionen des Pferdes anpassen lassen und die Urin-Sammelvorrichtung ausreichend in der gewünschten Position am Pferd fixieren. Nach dem Befestigen der Urin-Sammelvorrichtung sollte möglichst kein oder nur seltenes bis gelegentliches Nachadjustieren erforderlich werden und - auch bei möglichst weitgehender Bewegungsfreiheit des Pferdes - eine möglichst verlustfreie Urin-Sammlung sichergestellt sein.

Ein derartiges Haltegeschirr mit Urin-Sammelvorrichtung ist bereits in der internationalen Patentanmeldung WO 00/72667 beschrieben. Weiterhin wird in der internationalen Patentanmeldung WO 02/45488 ein Haltegeschirr mit einer Urin-Sammelvorrichtung beschrieben, wobei sich insbesondere die Urin-Sammelvorrichtung aufgrund eines ablösbaren Kopfteils bequem handhaben und hygienisch sauber halten lässt. Das Haltegeschirr selbst sollte darüber hinaus die Pferde möglichst wenig beeinträchtigen, einfach handhabbar und pflegeleicht sein und insbesondere eine flexible, an die individuellen Pferdemaße schnell anzupassende Befestigung der Urin-Sammelvorrichtung ermöglichen.

Es bestand daher die Aufgabe, ein optimiertes und kostengünstiges Haltegeschirr für eine flexible und leicht auswechselbare Befestigung einer Urin-Sammelvorrichtung an Pferden zur Verfügung zu stellen, das den hohen Anforderungen in Bezug auf den Tragekomfort für die Pferde und in Bezug auf eine praktikable Einsetzbarkeit im industriellen Maßstab gerecht wird, wobei das Haltegeschirr insbesondere sehr einfach handhabbar, pflegeleicht, wenig reparaturanfällig und kostengünstig sein soll und eine flexible, an die individuellen Pferdemaße schnell anzupassende Befestigung einer Urin-Sammelvorrichtung ermöglicht.

Die Aufgabe wird allgemein gelöst durch die in den Ansprüchen angegebene Netzdecke für Pferde als Haltegeschirr.

Die Erfindung schlägt daher eine Netzdecke für Pferde als Haltegeschirr zur flexiblen und auswechselbaren Befestigung einer Urin-Sammelvorrichtung an Pferden, insbesondere Stuten, vor, welches dadurch gekennzeichnet ist, dass es sich um ein den überwiegenden Teil des Pferderumpfes bedeckendes, seitlich bis maximal etwa zur unteren Rumpflinie herab reichendes und vor der Brust des Pferdes (2) geschlossenes oder verschließbares Netz (1) handelt und das Netz zur Lage fixierenden, aber dennoch lösbaren Aufhängung einer unterhalb des Pferdebauches tragbaren Urin-Sammelvorrichtung geeignet ist.

In der internationalen Patentanmeldung WO 00/72667 ist zwar bereits ein, etwa den Lenden- und Kruppenbereich bedeckendes grobmaschiges Netz zusammen mit einem konventionellen Grundgeschirr aus Gurten für Pferde beschrieben worden, welches ebenfalls zur Befestigung einer Urin-Sammelvorrichtung geeignet ist. Abweichend ist jedoch gemäß der vorliegenden Erfindung ausschließlich eine Netzdecke als Haltegeschirr vorgesehen. Diese besteht nur aus einem, den überwiegenden Teil des Rumpfes bedeckenden Netz, welches bereits selbst tragend ist und ohne ein zusätzliches aufwändiges Gurtsystem zur Befestigung einer Urin-Sammelvorrichtung verwendet werden kann.

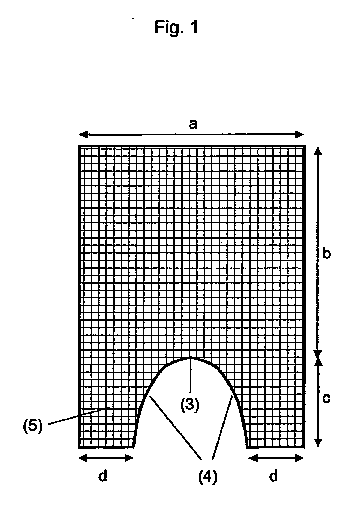

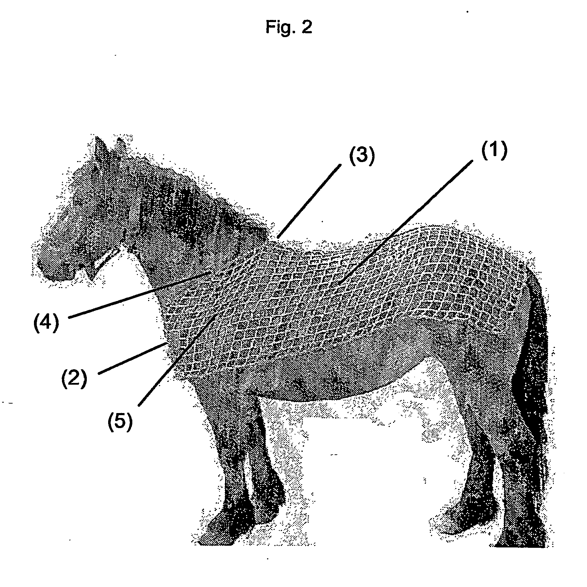

Die Erfindung wird im Folgenden in ihren einzelnen Details weiter beschrieben und durch die Figuren 1 bis 3 zusätzlich erläutert.

Die Verwendung einer Netzdecke für Pferde als Haltegeschirr im Rahmen der vorliegenden Erfindung weist beispielsweise den Vorteil auf, dass dieses Netz eine Vielzahl von Befestigungsmöglichkeiten für beliebige Urin-Sammelvorrichtungen bietet und somit diese Sammelvorrichtungen in idealer Weise mit einer großen Flexibilität am Pferd fixiert und adjustiert werden können. Dieses Netz ist daher für eine optimale Aufhängung und Fixierung von Urin-Sammelvorrichtungen insbesondere für Stuten sehr vorteilhaft, da hier ein möglichst verlustfreies Sammeln des Stuten-Urins nur bei dauerhafter einwandfreier Fixierung und Adjustierung der Urin-Sammelvorrichtung sichergestellt werden kann. Durch die Verwendung eines, den überwiegenden Teil des Pferderumpfes bedeckenden Netzes zur Aufhängung von Urin-Sammelvorrichtungen und die damit gegebenen Möglichkeiten zur Fixierung und Adjustierung dieser Urin-Sammelvorrichtungen wird eine bedeutende Verbesserung der Urin-Sammlung erreicht. Ferner wird durch das Netz - im Gegensatz z. B. zu einer Pferdedecke - ein mögliches Schwitzen des Pferdes weitgehend vermieden. Eine Beeinträchtigung der Östrogengewinnung aufgrund von Schweißsekretion ist daher bei der Verwendung der erfindungsgemäßen Netzdecke als ausschließliches Haltegeschirr nicht zu befürchten.

Die erfindungsgemäße Netzdecke für Pferde als Haltegeschirr zur Befestigung einer Urin-Sammelvorrichtung ist im Vergleich zu den aus dem Stand der Technik bekannten Haltegeschirren, welche stets zumindest ein Grundgeschirr aus Gurten umfassen oder ausschließlich aus Gurten bestehen, selbst tragend und benötigt keine zusätzlichen Gurte zu ihrer Befestigung und Fixierung am Pferd. Die Stabilität des Netzes und seine Fixierung am Pferd werden durch die Aufhängung und das Gewicht der Urin-Sammelvorrichtung erreicht. Die erfindungsgemäße Netzdecke als Haltegeschirr ist dem Pferd im Vergleich zu einem aus Gurten bestehenden Haltegeschirr sehr leicht anzulegen und aufgrund ihres geringen Eigengewichtes und ihrer großen Auflagefläche vom Pferd deutlich angenehmer zu tragen.

Weiterhin ist die erfindungsgemäße Netzdecke als Haltegeschirr sehr pflegeleicht, da die Pflege - im Gegensatz zu einem aus Gurten bestehenden Haltegeschirr - kein aufwändiges Ölen und Putzen der Gurte und Schnallen erfordert, sondern das Netz einfach waschbar ist. Damit wird auch eine größere Hygiene gewährleistet. Zusätzlich ist das erfindungsgemäße Haltegeschirr deutlich weniger reparaturanfällig und auch, da es nur aus einem zusammenhängenden Netz besteht, einfacher zu handhaben und aufzubewahren. Das optimierte erfindungsgemäße Haltegeschirr in Form der Netzdecke ist zudem im Vergleich zu den Haltegeschirren des Standes der Technik sehr kostengünstig in Herstellung, Anwendung und Pflege.

Die erfindungsgemäße Netzdecke für Pferde als Haltegeschirr zur Befestigung einer Urin-Sammelvorrichtung besteht aus einem, den überwiegenden Teil des Pferderumpfes bedeckenden, seitlich bis maximal etwa zur unteren Rumpflinie herab reichenden und vor der Brust des Pferdes (2) geschlossenen oder verschließbaren Netz, wobei das Netz so ausgeführt ist, dass es die Form eines Umhangs mit Halsöffnung hat und somit die Form einer in der Pferdehaltung üblichen Pferdedecke einnimmt. Vorzugsweise weist das Netz - wie in Fig. 1 schematisch dargestellt - eine allgemein U-förmige Gestalt mit sehr breiter Basis auf, wobei die Schenkel des U, welche im Folgenden als Seitenteile (5) bezeichnet werden, gedacht sind, um sich um den Hals und die Schultern des Pferdes zu erstrecken und um an seiner Brust miteinander reversibel lösbar oder dauerhaft verbunden zu sein. In einer besonderen Ausführungsform weist der den Pferderumpf bedeckende Abschnitt des Netzes - die Basis der U-Form - eine viereckige, insbesondere eine rechteckige Form mit einer Breite a) und einer Länge b) dieses Netzabschnittes auf. Das Größenverhältnis der Breite a) zur Länge b) kann zwischen 2:1 und 2:3 liegen. In einer bevorzugten Ausführungsform liegt das Größenverhältnis der Breite a) zur Länge b) in einem Bereich zwischen 3:2 und 1:1, so dass der den Pferderumpf bedeckende Abschnitt des Netzes eine rechteckige bis quadratische Form aufweist. An den, den Pferderumpf bedeckenden Abschnitt des Netzes schließen sich, ausgehend von der Position des Widerristes des Pferdes (3), die oben schon angeführten, nach vorne schmäler werdenden Seitenteile (5) mit einer Länge c) und einer Breite d) an. Die Länge c) dieser Seitenteile liegt vorzugsweise im Bereich zwischen einem Drittel bis zu einer Hälfte der Länge b) des den Pferderumpf bedeckenden Netzabschnittes. Die Breite d) jedes Seitenteils, gemessen am vorderen, schmalsten Ende d) des Seitenteils, liegt vorzugsweise etwa im Bereich zwischen einem Drittel bis zu einem Fünftel der gesamten Breite a) des den Pferderumpf bedeckenden Netzabschnitts. Die Enden der beiden Seitenteile (5) mit der Breite d) sind vor der Brust des Pferdes (2) miteinander reversibel lösbar oder dauerhaft verbunden. Die Verjüngung der Seitenteile (5) im Halsbereich des Pferdes kann kontinuierlich und geradlinig erfolgen; in einer bevorzugten Ausgestaltung weist die innere Kante jedes Seitenteils eine Bogenform auf.

Die nachfolgenden Angaben zu den Abmessungen des Netzes sollen die Ausgestaltung dieses Aspektes der Erfindung nur beispielhaft erläutern. Es versteht sich von selbst, dass der Fachmann diese Maße durchaus variieren und an die jeweils individuellen Gegebenheiten, Erfordernisse oder sonstige Rahmenbedingungen bei der Ausführung der Erfindung an einem gegebenen Ort anpassen kann, wie beispielsweise eine Anpassung an die individuell unterschiedliche Größe einzelner Pferde und an die individuell unterschiedliche Statur einzelner Pferde. Die Seiten des den Pferderumpf bedeckenden Netzabschnittes des erfindungsgemäßen Haltegeschirrs können im Allgemeinen in der Größenordnung etwa von 100 bis 170 cm für die Breite a) und in der Größenordnung etwa von 80 bis 150 cm für die Länge b) liegen. Als zweckmäßig hat sich eine Breite a) im Bereich etwa von 120 bis 150 cm, vorzugsweise im Bereich von 130 bis 140 cm, erwiesen. Zweckmäßigerweise weist die Länge b) eine Größe im Bereich etwa von 90 bis 140 cm auf, für kleinrahmige Pferde vorzugsweise eine Größe im Bereich etwa von 100 bis 110 cm und für großrahmige Pferde vorzugsweise im Bereich etwa von 120 bis 130 cm. Die Länge c) der nach vorne schmäler werdenden Seitenteile (5) kann im Allgemeinen in der Größenordnung zwischen etwa 30 und 90 cm liegen; als besonders zweckmäßig hat sich eine Länge c) im Bereich etwa von 45 bis 65 cm erwiesen. Die Breite d) jedes Seitenteils kann im Allgemeinen in der Größenordnung von etwa 10 bis 50 cm liegen; als besonders zweckmäßig hat sich eine Breite d) im Bereich von 20 bis 40 cm erwiesen.

Die seitlichen Enden des Netzes können bis maximal zur unteren Rumpflinie herabhängen; in einer anderen beispielhaften Ausführung reicht es, wenn die seitlichen Enden des Netzes so weit herabreichen, dass als Minimum etwa die Hälfte des Rumpfes bedeckt ist. Die seitlichen Enden des Netzes können aber auch bis zu jeder Position zwischen den beiden vorgenannten Extremen herabreichen. Die herabhängenden Enden des Netzes können gegebenenfalls noch durch einen oder mehrere locker angelegte, unter dem Pferd von der einen zur anderen Seite geführte Riemen zusätzlich gehalten werden.

Die erfindungsgemäße Netzdecke für Pferde als Haltegeschirr zur Befestigung einer Urin-Sammelvorrichtung hat die Form eines Umhangs mit Halsöffnung, wobei der Umhang so ausgeführt ist, dass er vor der Brust des Pferdes (2) geschlossen oder verschließbar ist. In einer bevorzugten Ausführungsform ist die erfindungsgemäße Netzdecke vor der Brust des Pferdes (2) - das Brustteil des Netzes - durchgängig und damit dauerhaft geschlossen, so dass das Netz dem Pferd wie ein Pullover über den Kopf gezogen wird. Bei dieser Ausführungsform sind die Vorderkanten der Netz-Seitenteile (5) mit der Breite d) vor der Brust des Pferdes miteinander permanent verbunden, beispielsweise indem die Enden fest miteinander vernäht sind. In einer anderen bevorzugten Ausführungsform der erfindungsgemäßen Netzdecke ist das Netz vor der Brust des Pferdes (2) verschließbar, d. h. es kann reversibel geöffnet und wieder verschlossen werden. Der Verschluss der den Schulterbereich des Pferdes bedeckenden Seitenteile (5) des Netzes erfolgt vor der Brust des Pferdes (2) bevorzugt über ein oder mehrere längenverstellbare Verbindungselemente, wie z. B. Bändel, Klettverschlüsse, Schnallen, Schnellspannriemen oder Expander, oder in einer anderen für Pferdedecken üblichen Verschlussart. Durch diese Verbindungselemente werden die Enden der Netz-Seitenteile (5) mit der Breite d) miteinander reversibel verbunden. Durch die Längenverstellung der Verbindungselemente kann das Netz damit individuell auch an Pferde mit unterschiedlicher Statur und Brustbreite angepasst werden.

Das Netz kann an sich aus allen für das Pferd verträglichen Materialen bestehen, wie aus Kunstfasern verschiedenster Natur, insbesondere z. B. aus Polyamidfaserstoffen wie beispielsweise Nylon, aus Polyacrylnitrilfaserstoffen oder aus Polyesterfaserstoffen, gegebenenfalls aber auch aus Leder, Hanf, Jute, Flachs oder Baumwolle oder aus Mischungen der vorgenannten Materialien. Die Stärke des Netzgewebes sollte dabei ausreichend robust ausgelegt sein, um auch längerer Beanspruchung in der Praxis standzuhalten. Die Netzränder werden in vorteilhaften, bevorzugten Ausgestaltungen des Netzes verstärkt ausgelegt sein. Hierzu können die Netzränder beispielsweise mit weiteren Materialien, z. B. Gewebe, Gewirke oder Vlies, umnäht, vernäht oder verschweißt sein. Weiterhin empfiehlt es sich, das Netz an den Rändern so zu behandeln, dass ein Auffasem der Netzschnüre verhindert wird; beispielsweise können Netze aus Nylonfasern mittels Hitze behandelt werden, um durch ein Anschmelzen der Fasern die Gefahr des Auffasems zu unterbinden.

Die erfindungsgemäße Netzdecke umfasst ein Netz mit Maschen, welche vorzugsweise eine quadratische Grundform aufweisen, aber auch eine leicht rechteckige Form besitzen können. Die nachfolgenden Angaben zu den Abmessungen der Netzmaschen sollen die Ausgestaltung dieses Aspektes der Erfindung nur beispielhaft erläutern. Es versteht sich von selbst, dass der Fachmann diese Maße durchaus variieren und an die jeweils individuellen Gegebenheiten, Erfordernisse oder sonstige Rahmenbedingungen bei der Ausführung der Erfindung an einem gegebenen Ort anpassen kann. Die Größe der Netzmaschen wird im Folgenden mittels der lichten Innenweite der einzelnen Maschen angegeben, wobei der kürzeste Abstand zwischen zwei gegenüberliegenden Netzschnüren innerhalb einer Masche, gemessen von der Innenseite zur Innenseite der Netzschnüre, bestimmt wird. In einer bevorzugten Ausführungsform der erfindungsgemäßen Netzdecke als Haltegeschirr handelt es sich bei dem Netz um ein grobmaschiges Netz, dessen Maschen eine minimale lichte Innenweite von 15 mm aufweisen. Die lichte Innenweite der Maschen des grobmaschigen Netzes kann im Allgemeinen im Bereich etwa von 15 bis 100 mm liegen; als besonders zweckmäßig hat sich eine lichte Innenweite im Bereich etwa von 20 bis 70 mm, insbesondere im Bereich etwa von 30 bis 50 mm erwiesen, wobei eine lichte Innenweite von 40 bis 45 mm als besonders bevorzugt angesehen wird. Der Querschnittsdurchmesser (Stärke) der Netzschnüre hängt stark von den gewählten Materialien ab. Außerdem ist der Querschnittsdurchmesser der Netzschnüre mit der Maschenweite korreliert: je größer die lichte Innenweite der Maschen ist, desto stärker müssen die Netzschnüre sein, und je kleiner die lichte Innenweite der Maschen ist, desto dünner können auch die Netzschnüre sein. Der Querschnittsdurchmesser (Stärke) der Netzschnüre des Netzes kann im Allgemeinen im Bereich etwa von 2 bis 12 mm, insbesondere im Bereich etwa von 3 bis 8 mm liegen; als besonders zweckmäßig hat sich die Verwendung von Netzschnüren mit einem Querschnittsdurchmesser im Bereich etwa von 4 bis 6 mm, insbesondere von etwa 5 mm, erwiesen.

Zum Schutz bzw. zur Schonung einzelner Körperpartien des Pferdes kann die erfindungsgemäße Netzdecke als Haltegeschirr weiterhin Polsterungen unterschiedlicher Stärke je nach Körperpartie aufweisen. Eine Polsterung des Netzes kann insbesondere für den Vorderbrustbereich (2), im Bereich des Widerristes (3) und gegebenenfalls des Rückens, und auch im Bereich an der seitlichen Brustwand des Pferdes wünschenswert sein. Es können übliche Materialien für die Polsterung verwendet werden; beispielsweise sind klassischer Filzstoff, Leder, synthetische oder natürliche Felle, aber auch moderne Fleece-Stoffe geeignet, welche jeweils in unterschiedlichen Stärken verwendet werden können und an dem Netz beispielsweise durch Vernähen oder lösbare Befestigungselemente, wie beispielsweise Bänder, Riemen oder Klettverschlüsse, befestigt werden. Es können aber auch beispielsweise mit wattierten Fasern gefüllte Kissen, die an den entsprechenden Positionen an dem Netz befestigt werden, Verwendung finden. In einer bevorzugten Ausgestaltung der Erfindung weist das Netz vor der Brust des Pferdes (2) eine Polsterung auf. Ist das Netz vor der Brust des Pferdes durchgängig geschlossen, kann ein solches Polster, beispielsweise in Form eines flächigen Lederstückes oder eines dünnen, gefütterten Kissens, welches lösbar oder fest mit dem Netz verbunden sein kann, ausgestaltet sein und den gesamten vorderen Brustbereich überspannen. Lässt sich das Netz vor der Brust des Pferdes (2) reversibel öffnen und wieder verschließen, kann die Polsterung entweder unabhängig von dem Verschlussmechanismus erfolgen oder in die dem Verschluss dienenden Verbindungselemente integriert werden. In einer weiteren bevorzugten Ausführungsform weist das Netz im Bereich des Widerristes (3) eine Polsterung auf, die gegebenenfalls bezüglich ihrer Lage verstellbar und damit an jedes Pferd individuell anpassbar ist. In einer beispielhaften Ausgestaltungsform kann das Netz im Bereich des Widerristes eine Flauschunterlage aus weichen, synthetischen oder natürlichen Materialien aufweisen, welche beispielsweise durch Klettverschlüsse am Netz an verschiedenen Positionen reversibel befestigt werden kann.

In einer bevorzugten Ausgestaltungsform erfolgt die Polsterung über durchgängige Lederbänder, welche mit dem Netz beispielsweise durch Vernähen fest verbunden sind und welche gegebenenfalls auch zusätzlich noch mit Filz oder vergleichbaren Geweben unterpolstert sein können. In einer Ausführungsform verlaufen die Lederpolster um die Vorderbrust (2) (den Bug) herum etwa horizontal auf beiden Seiten des Pferdes (im Bereich der Seitenteile (5) des Netzes) jeweils bis maximal etwa zur Mitte des Pferdebauches. In einer weiteren Ausführungsform verläuft ein Lederpolster, ausgehend vom Rücken im Bereich der Sattellage, auf beiden Seiten des Pferdes bis zu den seitlichen Enden des Netzes, gegebenenfalls können die Lederpolster auch über die Netzränder hinausreichen und unterhalb der Brust miteinander reversibel, beispielsweise durch ein längenverstellbares Verbindungselement, verbunden werden. In einer bevorzugten Ausgestaltung weist das Netz sowohl das um die Vorderbrust als auch das im Bereich der Sattellage verlaufende Lederpolster auf, wobei die Polster gegebenenfalls fest, beispielsweise durch Nähte oder Nieten, miteinander verbunden sein können.

Weiterhin kann die Öffnung der erfindungsgemäßen Netzdecke im Bereich des Widerristes (3) durch zusätzliche, längenverstellbare Verbindungselemente, die an den beiden Seitenteilen (5) befestigt werden können, in ihrer Größe einstellbar und so an die individuellen Pferdemaße im Bereich des Widerristes und an den Halsumfang anpassbar sein.

In einer weiteren Ausführungsform zeichnet sich die erfindungsgemäße Netzdecke als Haltegeschirr dadurch aus, dass die Netzränder des Netzes im Halsbereich (4) durch eine ringförmige Polsterung ausgeformt sind. Hierfür können beispielsweise die Ränder des Netzes mit weichen Polsterstoffen wie z. B. Polyesterwatte umhüllt sein, welche zur Fixierung mit abdeckenden Stoffen ummantelt und vernäht sind. Vorzugsweise sind die Netzränder im Halsbereich (4) mit breiten Lederbänder, welche die Netzkante abdecken, ummantelt.

Weiterhin kann für eine zusätzliche Fixierung der Netzdecke als Haltegeschirr das Netz mit einem im Bereich der Kruppe angebrachten, bis zum Schweifansatz verlaufenden Schweifriemen mit einer den Schweifansatz umfassenden Schweifschlaufe ausgestattet sein.

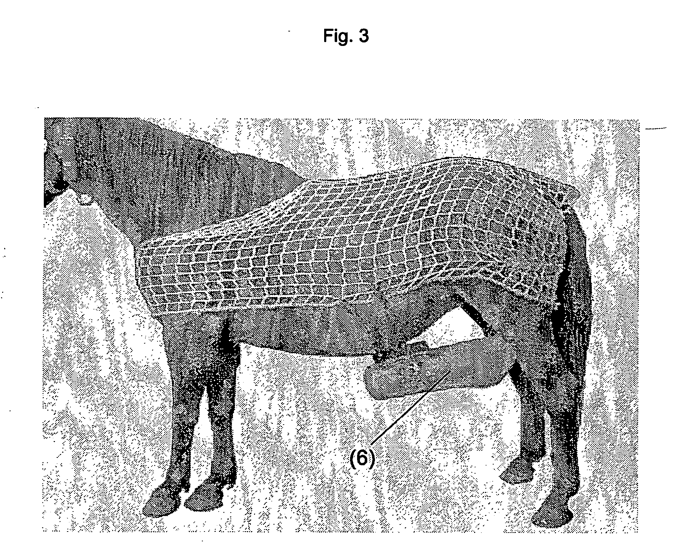

Die Befestigung einer möglichen Urin-Sammelvorrichtung (6) an der erfindungsgemäßen Netzdecke als Haltegeschirr, ausgestaltet in Form eines den überwiegenden Teil des Pferderumpfes bedeckenden Netzes ist in Fig. 3 beispielhaft dargestellt. Die Befestigung selbst kann auf vielfältige Weise, beispielsweise über Schnüre, Expander, Riemen oder dergleichen erfolgen. Als zweckmäßig hat sich für den praktischen Einsatz insbesondere die Befestigung durch Expander oder durch flach anliegende Nylongurte mit Steckverbindungen aus Kunststoff erwiesen. Es können handelsübliche Expander mit Haken verwendet werden; vorteilhafter aufgrund der geringeren Verletzungsgefahr für das Pferd sind jedoch Expander oder Gummiseile mit flach anliegenden Karabinerhaken, z.B. aus Kunststoff oder Edelstahl.

Neben den, vorstehend bereits im Zusammenhang mit der Erläuterung der erfindungsgemäßen Netzdecke als Haltegeschirr zur flexiblen Aufhängung einer Urin-Sammelvorrichtung beschriebenen Vorteile, bietet die Erfindung darüber hinaus noch weitere Vorteile:

Die erfindungsgemäße, aus einem Netz (1) bestehende Netzdecke für Pferde als Haltegeschirr zur Befestigung einer Urin-Sammelvorrichtung ist universell einsetzbar und aufgrund ihrer Konstruktion, insbesondere ihrer Einteiligkeit, gut zu handhaben. Beliebig ausgestaltete Urin-Sammelvorrichtungen lassen sich flexibel und mit guter Lagefixierung daran aufhängen. Das Anbringen bzw. Abnehmen der Netzdecke als Haltegeschirr entspricht dem Auflegen bzw. Abnehmen einer üblichen Pferdedecke und kann schnell mit flüssigem Bewegungsablauf durchgeführt werden, so dass eine Beunruhigung des Pferdes durch ungewollte hektische Handhabungen und die daraus resultierenden Gefahren kaum zu befürchten sind. Das Auflegen bzw. Abnehmen des Netzes ist in kürzester Zeit zu bewerkstelligen; bei vor der Brust verschlossenen Netzes wird das Netz dem Pferd über den Kopf gestülpt, während bei den vor der Brust zu öffnenden Netzen lediglich die entsprechenden Verbindungselemente nach dem Auflegen zu verschließen bzw. vor dem Abnehmen zu öffnen sind. Diese Verschlussmöglichkeit gewährleistet weiterhin eine individuelle Anpassung des Netzes an die unterschiedliche Statur einzelner Pferde. Die Netzdecke als Haltegeschirr ist mit einer befestigten Urin-Sammelvorrichtung Langzeit-tragbar. So ist z.B. eine 24-stündige Urin-Sammlung bei entsprechender Pflege und Sauberhaltung der Urin-Sammelvorrichtung möglich, wobei die Urin-Sammelvorrichtung für die täglich mindestens dreimalige Entleerung und Reinigung leicht vom Pferd abgenommen bzw. gewechselt werden kann. Das Pferd ist aufgrund der Netzdecke als Haltegeschirr selbst mit Urin-Sammelvorrichtung frei beweglich. Aufgrund der für das Pferd gewährleisteten hohen Flexibilität und Bewegungsfreiheit ist bei Verwendung der erfindungsgemäßen Netzdecke als Haltegeschirr mit Urin-Sammelvorrichtung eine Ständer- oder Boxenhaltung des Pferdes nicht erforderlich, sondern für die Pferde ist ein Weidegang jederzeit möglich. Ebenso können Fohlen auch bei Stuten mit angehängter Urin-Sammelvorrichtung jederzeit ohne Probleme selbständig saugen. Andererseits kann erforderlichenfalls die gesamte Konstruktion umfassend die erfindungsgemäße Netzdecke als Haltegeschirr zusammen mit der Urin-Sammelvorrichtung sehr leicht und schnell abgenommen und später wieder angelegt werden, z. B. tagsüber für den Weidegang, falls nur eine Nachtsammlung von Urin vorgesehen ist. Weiterhin ist die aus einem Netz bestehende Netzdecke für Pferde als Haltegeschirr äußerst kostengünstig, extrem pflegeleicht und industriell gut herstellbar. Diese Netze können, wie entsprechende Pferdedecken, beispielsweise in mehreren verschiedenen Größen gefertigt und bereitgestellt werden. So ist, im Gegensatz zu einem konventionellen Haltegeschirr aus Gurten, keine aufwändige individuelle Einstellung einer Vielzahl von Gurtschnallen notwenig, um die Netzdecke als Haltegeschirr an die individuellen Maße jedes Pferdes anzupassen.

Zur beispielhaften Erläuterung der vorstehenden Erfindung, ohne sie jedoch in ihrem Umfang zu begrenzen, dienen die folgenden Zeichnungen:
Fig. 1
   Schematische Darstellung der erfindungsgemäßen Netzdecke für Pferde als Haltegeschirr zur Befestigung einer Urin-Sammelvorrichtung in Aufsicht, wobei die Netzdecke im Brustbereich (entlang der Breite d) der Seitenteile (5)) geöffnet dargestellt ist:
   Lage des Widerristes (3), Netzrand im Halsbereich (4), Seitenteil (5); Breite a) und Länge b) des den Pferderumpf bedeckende Netzabschnittes; Länge c) und Breite d) eines Seitenteils (5).
Fig. 2
   Seitliche Ansicht eines Pferdes mit aufgelegter Netzdecke als Haltegeschirr zur Befestigung einer Urin-Sammelvorrichtung:
   Netz (1), Pferdebrust (2), Lage des Widerristes (3), Netzrand im Halsbereich (4), Seitenteil (5).
Fig. 3
   Seitliche Ansicht eines Pferdes mit aufgelegter Netzdecke als Haltegeschirr und mit einer daran befestigen Urin-Sammelvorrichtung (6).

## Patentansprüche

1. Netzdecke für Pferde als Haltegeschirr zur flexiblen und auswechselbaren Befestigung einer Urin-Sammelvorrichtung an Pferden, insbesondere Stuten, wobei es sich um ein den überwiegenden Teil des Pferderumpfes bedeckendes, seitlich bis maximal etwa zur unteren Rumpflinie herab reichendes und vor der Brust des Pferdes (2) geschlossenes oder verschließbares Netz (1) handelt, welches so ausgeführt ist, dass es die Form eines Umhangs mit Öffnung für den Hals hat, und dass das Netz zur Lage fixierenden, aber dennoch lösbaren Aufhängung einer unterhalb des Pferdebauches tragbaren Urin-Sammelvorrichtung geeignet ist.

2. Netzdecke für Pferde als Haltegeschirr nach Anspruch 1, wobei es sich bei dem Netz um ein grobmaschiges Netz handelt, dessen Maschen eine minimale lichte Innenweite von 15 mm aufweisen.

3. Netzdecke für Pferde als Haltegeschirr nach Anspruch 2, wobei die Maschen des grobmaschigen Netzes eine lichte Innenweite im Bereich etwa von 15 bis 100 mm, vorzugsweise im Bereich etwa von 20 bis 70 mm und insbesondere im Bereich etwa von 30 bis 50 mm aufweisen.

4. Netzdecke für Pferde als Haltegeschirr nach einem der vorherigen Ansprüche, wobei das Netz einen Querschnittsdurchmesser der Netzschnüre im Bereich von etwa 2 bis 12 mm, insbesondere im Bereich etwa von 3 bis 8 mm aufweist.

5. Netzdecke für Pferde als Haltegeschirr nach einem der vorherigen Ansprüche, wobei das Netz aus Nylonmaterial besteht.

6. Netzdecke für Pferde als Haltegeschirr nach einem der vorherigen Ansprüche, wobei das Netz an den Netzrändern verstärkt ausgelegt ist.

7. Netzdecke für Pferde als Haltegeschirr nach einem der vorherigen Ansprüche, wobei das Netz vor der Brust des Pferdes (2) eine Polsterung aufweist.

8. Netzdecke für Pferde als Haltegeschirr nach einem der vorherigen Ansprüche, wobei das Netz vor der Brust des Pferdes geschlossen ist.

9. Netzdecke für Pferde als Haltegeschirr nach Anspruch 1 bis 7, wobei das Netz vor der Brust des Pferdes reversibel verschließbar ist.

10. Netzdecke für Pferde als Haltegeschirr nach einem der vorherigen Ansprüche, wobei das Netz im Bereich des Widerristes (3) eine, gegebenenfalls an das Pferd individuell anpassbare Polsterung aufweist.

11. Netzdecke für Pferde als Haltegeschirr nach einem der vorherigen Ansprüche, wobei die Öffnung des Netzes im Bereich des Widerristes (3) in ihrer Größe einstellbar ist.

12. Netzdecke für Pferde als Haltegeschirr nach einem der vorherigen Ansprüche, wobei die Netzränder des Netzes im Halsbereich (4) durch eine ringförmige Polsterung ausgeformt sind.

13. Netzdecke für Pferde als Haltegeschirr nach einem der vorherigen Ansprüche, wobei am Netz eine Urin-Sammelvorrichtung in einer Lage fixierenden Position unterhalb des Pferdebauches aufgehängt ist.

## Claims

1. A net blanket for horses as a holding harness for the flexible and replaceable fastening of a urine collecting device to horses, in particular mares, wherein it is a net (1) covering the predominant part of the horse's rump which at the sides reaches down to at most approximately the lower rump line and is closed or can be closed in front of the breast of the horse (2), which net is designed such that it is in the form of a cape with an opening for the neck and the net is suitable for the position-fixing, yet detachable suspension of a urine collecting device which can be worn beneath the horse's belly.

2. A net blanket for horses as a holding harness according to Claim 1, the net being a large-mesh net, the mesh holes of which have a minimum internal width of 15 mm.

3. A net blanket for horses as a holding harness according to Claim 2, the mesh holes of the large-mesh net having an internal width in the range of approximately 15 to 100 mm, preferably in the range of approximately 20 to 70 mm and in particular in the range of approximately 30 to 50 mm.

4. A net blanket for horses as a holding harness according to one of the preceding claims, the net having a cross-sectional diameter of the net cords in the range of about 2 to 12 mm, in particular in the range of approximately 3 to 8 mm.

5. A net blanket for horses as a holding harness according to one of the preceding claims, the net being of nylon material.

6. A net blanket for horses as a holding harness according to one of the preceding claims, the net being reinforced at the edges.

7. A net blanket for horses as a holding harness according to one of the preceding claims, the net having padding in front of the breast of the horse (2).

8. A net blanket for horses as a holding harness according to one of the preceding claims, the net being closed in front of the breast of the horse.

9. A net blanket for horses as a holding harness according to Claims 1 to 7, the net being reversibly closable in front of the breast of the horse.

10. A net blanket for horses as a holding harness according to one of the preceding claims, the net having padding in the region of the withers (3) which can optionally be adapted individually to the horse.

11. A net blanket for horses as a holding harness according to one of the preceding claims, the opening in the net in the region of the withers (3) being of adjustable size.

12. A net blanket for horses as a holding harness according to one of the preceding claims, the edges of the net being shaped in the neck region (4) by annular padding.

13. A net blanket for horses as a holding harness according to one of the preceding claims, a urine collecting device being suspended from the net in a position-fixing position beneath the horse's belly.

## Revendications

1. Surdos en filet pour chevaux, servant de harnais de support pour la fixation flexible et interchangeable d'un dispositif de collecte d'urine sur des chevaux, en particulier des juments, ce surdos étant constitué d'un filet (1) qui recouvre la majeure partie du tronc du cheval, s'étend latéralement au maximum environ jusqu'à la ligne inférieure du tronc, et est fermé ou peut être fermé devant le poitrail du cheval (2), ce filet étant réalisé de façon à présenter la forme d'une cape qui présente une ouverture pour l'encolure, et étant adapté à l'accrochage en position localisée, mais toutefois amovible, d'un dispositif de collecte d'urine pouvant être porté sous le ventre du cheval.

2. Surdos en filet pour chevaux, servant de harnais de support, selon la revendication 1, pour lequel le filet est un filet à grosses mailles, dont les mailles présentent une largeur intérieure d'ouverture minimale de 15 mm.

3. Surdos en filet pour chevaux, servant de harnais de support, selon la revendication 2, pour lequel les mailles du filet à grosses mailles présentent une largeur intérieure d'ouverture située dans une plage d'environ 15 à 100 mm, de préférence dans une plage de 20 à 70 mm, et notamment dans une plage d'environ 30 à 50 mm.

4. Surdos en filet pour chevaux, servant de harnais de support, selon l'une des revendications précédentes, pour lequel le filet présente un diamètre de section transversale des cordons du filet, se situant dans une plage d'environ 2 à 12 mm, notamment dans une plage d'environ 3 à 8 mm.

5. Surdos en filet pour chevaux, servant de harnais de support, selon l'une des revendications précédentes, pour lequel le filet est réalisé en un matériau du type "Nylon".

6. Surdos en filet pour chevaux, servant de harnais de support, selon l'une des revendications précédentes, pour lequel le filet est d'une conception renforcée au niveau des bords du filet.

7. Surdos en filet pour chevaux, servant de harnais de support, selon l'une des revendications précédentes, pour lequel le filet présente un rembourrage devant le poitrail du cheval (2).

8. Surdos en filet pour chevaux, servant de harnais de support, selon l'une des revendications précédentes, pour lequel le filet est fermé devant le poitrail du cheval.

9. Surdos en filet pour chevaux, servant de harnais de support, selon les revendications 1 à 7, pour lequel le filet peut être fermé de manière réversible devant le poitrail du cheval.

10. Surdos en filet pour chevaux, servant de harnais de support, selon l'une des revendications précédentes, pour lequel le filet présente, dans la région du garrot (3), un rembourrage pouvant éventuellement être adapté de manière individuelle au cheval.

11. Surdos en filet pour chevaux, servant de harnais de support, selon l'une des revendications précédentes, pour lequel l'ouverture du filet est de grandeur réglable dans la région du garrot (3).

12. Surdos en filet pour chevaux, servant de harnais de support, selon l'une des revendications précédentes, pour lequel les bords de filet du filet sont formés par un rembourrage de forme annulaire dans la région de l'encolure (4).

13. Surdos en filet pour chevaux, servant de harnais de support, selon l'une des revendications précédentes, pour lequel un dispositif de collecte d'urine est accroché au filet, dans une position localisée, sous le ventre du cheval.
